Europäisches Patentamt

European Patent Office

Office européen des brevets

Veröffentlichungsnummer: **0 286 987**

**A1**

# EUROPÄISCHE PATENTANMELDUNG

Anmeldenummer: **88105600.6**

Int. Cl.⁴ **G11B 33/04 , B42F 15/00**

Anmeldetag: **08.04.88**

Priorität: **15.04.87 DE 3712803**

Veröffentlichungstag der Anmeldung:
**19.10.88 Patentblatt 88/42**

Benannte Vertragsstaaten:
**AT BE CH DE ES FR GB GR IT LI LU NL SE**

Anmelder: **Elba-Ordner-Fabrik Kraut & Meienborn GmbH & Co.**
**Moritzstrasse 15-19**
**D-5600 Wuppertal 1(DE)**

Erfinder: **Behrens, Dietmar**
**Holzkampsweg 4**
**D-4000 Düsseldorf 12(DE)**
Erfinder: **Hoog, Waldemar**
**Nevigeser Strasse 258**
**D-5600 Wuppertal 1(DE)**
Erfinder: **Zimmermann, Rudolf**
**Eupener Strasse 8**
**D-5600 Wuppertal 11(DE)**

Vertreter: **Patentanwälte Dr. Solf & Zapf**
**Schlossbleiche 20 Postfach 13 01 13**
**D-5600 Wuppertal 1(DE)**

**Vorrichtung zum Aufbewahren von Datendisketten in Aktenordnern.**

Eine Vorrichtung zum Aufbewahren von Datendisketten, insbesondere von 3-1/2 Zoll-Disketten, in Registraturmitteln, insbesondere in Aktenordnern und dergleichen, besteht aus einem flachen Halterungsteil (2) für die Diskette und einem an einem Seitenrand des Halterungsteils (2) angeordneten Heftrand (3) mit einer Heftlochung (4). Das Halterungsteil (2) weist eine die Diskette in Richtung von drei Seitenkanten sowie in zur Diskettenebene senkrechter Richtung fixierende Aufnahme (5) sowie Halterungsmittel (13, 22) zum Fixieren der Diskette in der Aufnahme (5) auf. Gemäß der Erfindung sind die Halterungsmittel (13, 22) derart ausgebildet, daß sie die Diskette in der Aufnahme (5) des Halterungsteiles (2) rastend und/oder klemmend fixieren. Das Halterungsteil (2) ist vorzugsweise mit dem Heftrand (3) als einstückiges Kunststoff-Spritz-oder Preßteil ausgebildet.

Fig. 2

## Vorrichtung zum Aufbewahren von Datendisketten in Aktenordnern

Die vorliegende Erfindung betrifft eine Vorrichtung zum Aufbewahren von Datendisketten, insbesondere von 3-1 2 Zoll-Disketten, in Registraturmitteln, insbesondere in Aktenordnern u.dgl., bestehend aus einem flachen Halterungsteil für die Diskette und einem an einem Seitenrand des Halterungsteiles angeordneten Heftrand mit einer Heftlochung, wobei das Halterungsteil eine die Diskette in Richtung von drei Seitenkanten sowie in zur Diskettenebene senkrechter Richtung fixierende Aufnahme sowie Halterungsmittel zum Fixieren der Diskette in der Aufnahme aufweist.

Eine derartige Vorrichtung ist aus der DE-OS 35 12 823 bekannt. Das Halterungsteil dieser Vorrichtung besteht aus einem Abheftblatt aus einer Kunststoffolie mit einem auf der Abheftseite angeordneten Heftrand mit Lochungen zum Abheften der Folie in einem Aktenordner. Am unteren Ende der Vorderseite des im DIN A4-Format ausgebildeten Abheftblattes befinden sich auf der Seite des Heftrandes sowie auf der dem Heftrand gegenüberliegenden Seite je eine taschenartige, mit dem Abheftblatt stoffschlüssig verbundene Halterung, die nach oben und in Richtung der jeweils gegenüberliegenden Halterung offen ausgebildet sind. Die Halterungen bilden eine Aufnahme, die eine von oben in die Halterungen eingeführte Diskette gegen Bewegungen nach unten sowie in seitlicher Richtung fixiert. Für eine zusätzliche Fixierung der Diskette ist ein Halterungsmittel, und zwar eine im mittig oberhalb der Halterungen liegenden Bereich des Abheftblattes befestigte Scheibe vorgesehen, die aufgrund eines durch einen teilringförmigen Freischnitt gebildeten Steges in einer zu dem Abheftblatt senkrechten Richtung beweglich ist. Die Scheibe soll in ein für den Plattenantrieb der Diskette vorgesehenes Loch eingreifen und so die Diskette zusätzlich derart fixieren, daß ein unbeabsichtigtes Herausrutschen aus der von den taschenartigen Halterungen gebildeten Aufnahme verhindert wird. Die Halterungsmittel der bekannten Vorrichtung eignen sich jedoch nur für solche Disketten, die ein zentrisches Durchgangsloch aufweisen, also insbesondere nicht für Disketten, deren Magnetplatte in einem flachen Gehäuse angeordnet ist, bei dem lediglich eine Gehäusehälfte eine Öffnung zum Durchführen eines Mitnehmers für die Magnetscheibe aufweist, während die andere Gehäusehälfte - abgesehen von einer Abtastöffnung - geschlossen ausgebildet ist, wie dies z.B. bei 3-1 2 Zoll-Disketten (sog. Mikro Floppy Disk) der Fall ist. Demzufolge können derartige Disketten zwar in die Aufnahme der bekannten Vorrichtung eingeführt werden, jedoch ist ein unbeabsichtigtes Herausrutschen der Diskette aus der Aufnahme möglich, wobei die Scheibe sehr störend wirkt, da sie durch die Diskette nach hinten aus der Blattebene herausgedrückt wird.

Aus der europäischen Veröffentlichung 0 190 546 ist eine Aufnahmevorrichtung zum geordneten Aufbewahren plattenförmiger Gegenstände, wie Schallplatten, Disketten, Magnetbandkassetten u.dgl., bekannt. Diese Aufnahmevorrichtung besteht aus einem kastenförmigen Aufnahmebehälter, in den einzelne, voneinander unabhängige, als Steckeinsätze ausgebildete Halterungen derart einsetzbar sind, daß sie jeweils für sich schwenkbar in dem Behälter gelagert sind. Die Steckeinsätze bestehen jeweils aus einer Haltetasche, die mit einem Steckfuß in Lagerschlitze des Behälterbodens eingesetzt ist. Die Steckeinsätze nehmen in ihren Haltetaschen die aufzubewahrenden Gegenstände auf. Abgesehen davon, daß die Steckeinsätze keine Heftränder mit Lochungen aufweisen, eignen sie sich ohnehin nicht zum Abheften in Aktenordnern u.dgl., da die Gegenstände lediglich von oben in die Taschen eingeschoben, dabei jedoch nicht fixiert werden. Demzufolge könnten die Gegenstände auch hier unbeabsichtigt aus den Halterungen herausrutschen.

Der vorliegenden Erfindung liegt die Aufgabe zugrunde, ausgehend von dem eingangs beschriebenen Stand der Technik eine Vorrichtung zum Aufbewahren von Disketten in Aktenordnern u.dgl. anzugeben, die auch Durchgangsloch-freie Disketten, und zwar insbesondere 3-1 2 Zoll-Disketten, sicher festhält, und die dennoch einfach gehandhabt werden kann sowie preiswert in der Herstellung ist.

Erfindungsgemäß wird dies dadurch erreicht, daß die Halterungsmittel derart ausgebildet sind, daß sie die Diskette rastend und/oder klemmend fixieren. Bei einer ersten Ausführungsform der Erfindung sind die Halterungsmittel als Rastnocken ausgebildet, die rastend in an der Diskette ausgebildete Vertiefungen und/oder Ausnehmungen eingreifen. Alternativ oder zusätzlich hierzu ist es erfindungsgemäß vorgesehen, daß die Halterungsmittel als die Diskette an einer Kante klemmend umgreifender Halter ausgebildet sind. Hierdurch eignet sich die erfindungsgemäße Vorrichtung vorteilhafterweise zum Aufbewahren beliebiger Disketten, wobei natürlich die Aufnahme in ihren Abmessungen an die Größe der jeweils aufzubewahrenden Diskette anzupassen ist. Die erfindungsgemäße Vorrichtung ist besonders preiswert herzustellen, wenn das Halterungsteil mit dem Heftrand als einstückiges Kunststoff-Spritz-oder Preßteil ausgebildet ist. Weitere vorteilhafte Ausgestaltungsmerkmale der Erfindung sind in den Unteransprüchen sowie der folgenden Beschreibung enthalten.

Anhand mehrerer, in der Zeichnung dargestellter Ausführungsbeispiele soll im folgenden die Erfindung näher erläutert werden. Dabei zeigen:

Fig. 1 eine Aufsicht auf die Rückseite einer ersten Ausführungsform einer erfindungsgemäßen Vorrichtung zum Aufbewahren von Disketten,

Fig. 2 eine Aufsicht auf die Vorderseite der Vorrichtung nach Fig. 1,

Fig. 3 eine Ansicht in Pfeilrichtung III gemäß Fig. 2,

Fig. 4 einen Schnitt längs der Linie IV-IV gemäß Fig. 1,

Fig. 5 eine vergrößerte Ansicht der Einzelheit V gemäß Fig. 4,

Fig. 6 eine vergrößerte Ansicht der Einzelheit VI gemäß Fig. 3,

Fig. 7 eine vergrößerte Ansicht der Einzelheit VII gemäß Fig. 3,

Fig. 8 eine Aufsicht einer zweiten Ausführungsform der erfindungsgemäßen Vorrichtung mit einer gehalterten Diskette,

Fig. 9 einen Schnitt längs der Linie IX-IX gemäß Fig. 8,

Fig. 10 eine Perspektivdarstellung der Einzelheit X gemäß Fig. 8,

Fig. 11 eine Perspektivdarstellung der Einzelheit XI gemäß Fig. 8,

Fig. 12 einen Schnitt längs der Linie XII-XII gemäß Fig. 10,

Fig. 13 eine Perspektivdarstellung einer weiteren Ausführungsform der erfindungsgemäßen Vorrichtung,

Fig. 14 eine Perspektivdarstellung einer alternativen Ausgestaltung des Bereichs XIV gemäß Fig. 13 aus einem anderen Blickwinkel mit zusätzlicher Darstellung eines Teils einer aufzubewahrenden Diskette und

Fig. 15 eine Perspektivdarstellung einer weiteren Alternativausbildung des Bereiches XIV gemäß Fig. 13 aus dem Blickwinkel nach Fig. 14.

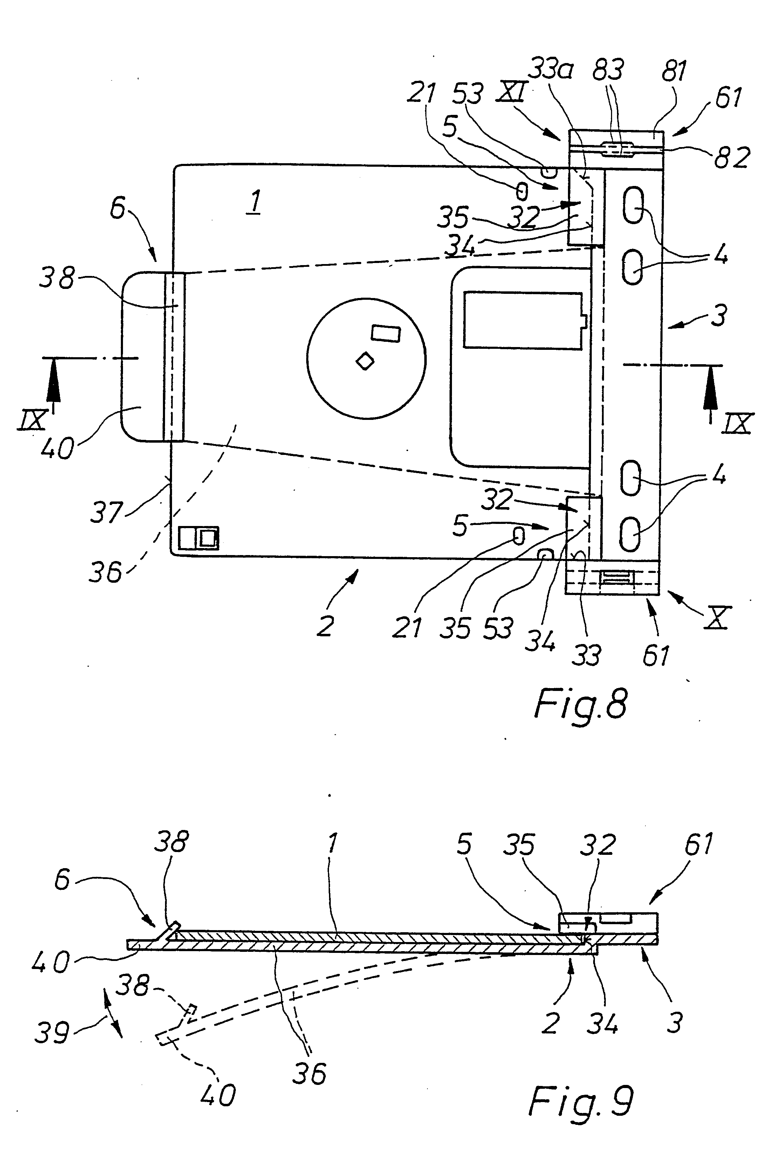

Die erfindungsgemäße Vorrichtung zum Aufbewahren einer Diskette 1 (siehe Fig. 8, 9 und 14) besteht in allen beispielhaft dargestellten Ausführungsformen aus einem flachen Halterungsteil 2 für die Diskette 1 und einem an einem Seitenrand des Halterungsteils 2 angeordneten Heftrand 3 mit einer Heftlochung 4. Die Lochung 4, d.h. die Anordnung der einzelnen Heftlöcher, ist allgemein bekannt und nicht Gegenstand der vorliegenden Erfindung.

Erfindungsgemäß ist das Halterungsteil 2 mit dem Heftrand 3 als einstückiges Kunststoff-Spritz- oder Preßteil ausge bildet. Hierdurch ist die erfindungsgemäße Vorrichtung derart starr bzw. formstabil, daß sie vorteilhafterweise auch eine Schutz- bzw. Stützfunktion für die mechanisch empfindliche Diskette ausüben kann. Weiterhin gewährleistet sie eine sehr gute Halterung der Diskette, da eine hohe elastische Klemmkraft realisiert werden kann.

Das Halterungsteil 2 besitzt eine die Diskette 1 in Richtung von drei Seitenkanten sowie in zur Diskettenebene senkrechter Richtung fixierende, auf einer Seite eine Einschuböffnung für die Diskette 1 aufweisende Aufnahme 5 sowie Halterungsmittel 6 zum Fixieren der Diskette 1 in der Aufnahme 5. Der Heftrand 3 ist dabei erfindungsgemäß an dem der Einschuböffnung der Aufnahme 5 gegenüberliegenden Seitenrand des Halterungsteils 2 quer, insbesondere senkrecht, zur Einschubrichtung der Diskette 1 angeordnet, wodurch sich eine gute Zugriffmöglichkeit der Diskette ergibt. Ist nämlich die erfindungsgemäße Vorrichtung z.B. in einem Aktenordner eingeheftet, so können die Disketten von der Seite her eingeführt und entnommen werden.

Die sich in den einzelnen Ausführungsbeispielen der Erfindung unterscheidenden, speziellen Ausbildungen des Halterungsteiles 2, der Aufnahme 5 und der Halterungsmittel 6 werden im folgenden genauer erläutert.

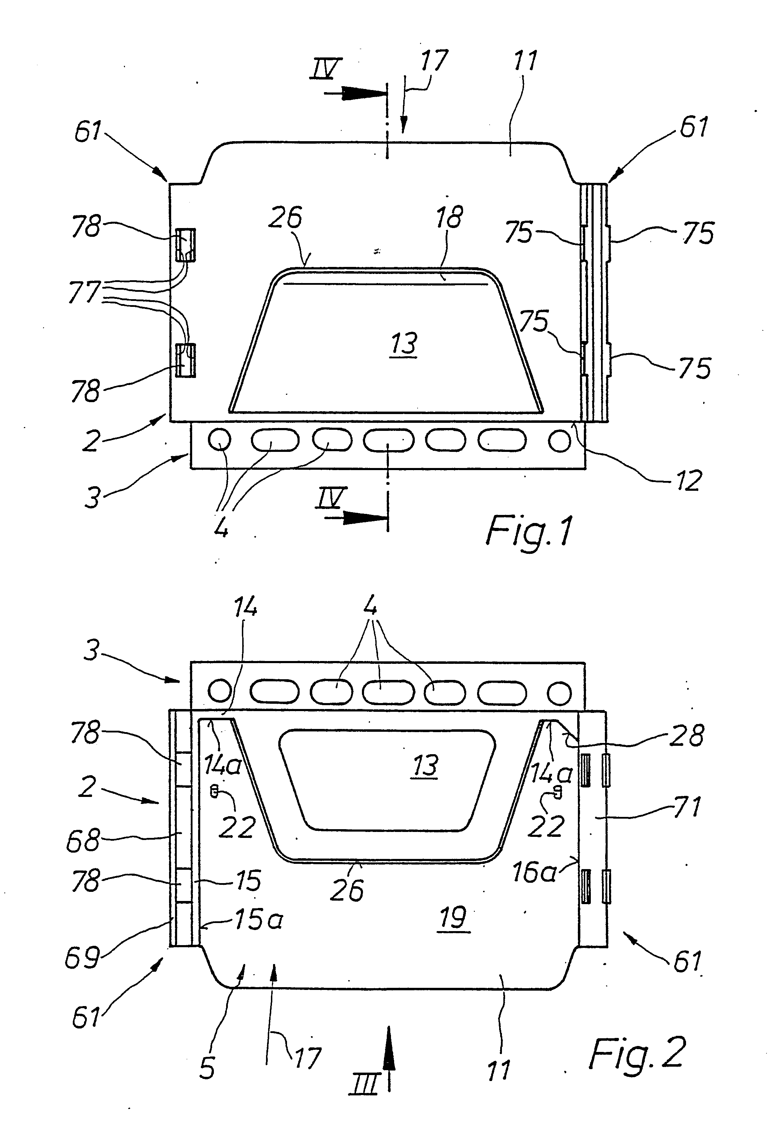

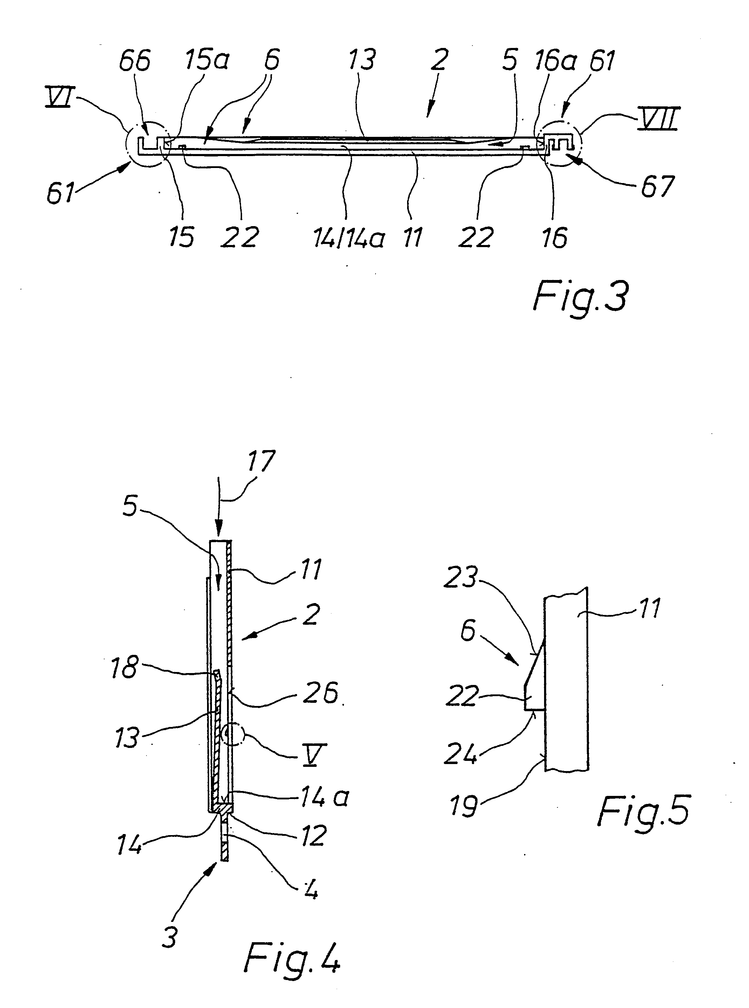

In der ersten, in den Fig. 1 bis 7 dargestellten Ausführungsform der erfindungsgemäßen Vorrichtung besteht das Halterungsteil 2 aus einer ebenen, im wesentlichen rechteckigen Tragplatte 11, an die sich einseitig der Heftrand 3 anschließt. Entgegen der dargestellten Ausbildung (siehe insbesondere Fig. 4), bei der Heftrand 3 über eine Stufe 12 mit der Tragplatte 11 verbunden ist, liegt es im Rahmen der Erfindung, die Tragplatte 11 und den Heftrand 3 miteinander fluchtend in einer Ebene liegend auszubilden. Das Halterungsteil 2 besteht weiterhin aus einem im Verbindungsbereich zwischen dem Heftrand 3 und der Tragplatte 11 angebundenen, zu der Tragplatte 11 etwa parallel angeordneten, federelastischen, flachen Andruckelement 13. Der lichte Abstand zwischen den einander zugekehrten Flächen der Tragplatte 11 und des Andruckelementes 13 ist im Bereich des freien, federelastisch beweglichen Endes des Andruckelementes 13 vorzugsweise kleiner als die Dicke der Diskette 1, so daß letztere durch die Elastizität des Andruckelementes 13 zwischen letzterem und der Tragplatte 11 klemmend gehalten wird. In dem dem Heftrand 3 zugekehrten Bereich entspricht dagegen der lichte Abstand zwischen der Tragplatte 11 und dem Andruckelement 13 etwa der Dicke der Diskette 1. Im Verbindungsbereich zwischen dem Heftrand 3, der Tragplatte 11 und dem Andruckelement 13 ist durch einen zu der Tragplatte 11 senkrechten Steg 14 eine zu dem Heftrand 3 parallele Anlagekante 14a gebildet. Dabei ist das Andruckelement 13 zungenartig, schmaler als die Aufnahme 5 bzw. die Diskette 1 ausgebildet, so daß es sich mittig nur über einen Teil des Steges 14 erstreckt. Senkrecht zu dem Steg 14 bzw. der Anlagekante 14a verlaufen zwei durch zu der Tragplatte 11 ebenfalls senkrecht angeordnete Stege 15, 16 gebildete Seitenführungen 15a, 16a, deren senkrecht gemessener Abstand voneinander der Breite der Diskette 1 entspricht bzw. geringfügig größer ist. Zwischen den seitlichen Stegen 15, 16 und dem Andruckelement 13 ist jeweils ein seitlicher Abstand gebildet. Somit ist das Andruckelement 13 vorteilhafterweise über seine gesamte Länge, beginnend an dem Steg 14, federelastisch. Von der Tragplatte 11, dem Andruckelement 13, der Anlagekante 14a und den Seitenführungen 15a, 16a wird die Aufnahme 5 gebildet, in die die Diskette 1 in Pfeilrichtung 17 einschiebbar ist. Aufgrund der klemmenden Halterung der Diskette 1 zwischen der Tragplatte 11 und dem Andruckelement 13, welches vorteilhafterweise an seiner freien Endkante eine von der Tragplatte 11 weggerichtete Einführschräge 18 aufweist, wird die Diskette 1 bereits ausreichend gegen unbeabsichtigtes Herausrutschen aus der Aufnahme 5 fixiert.

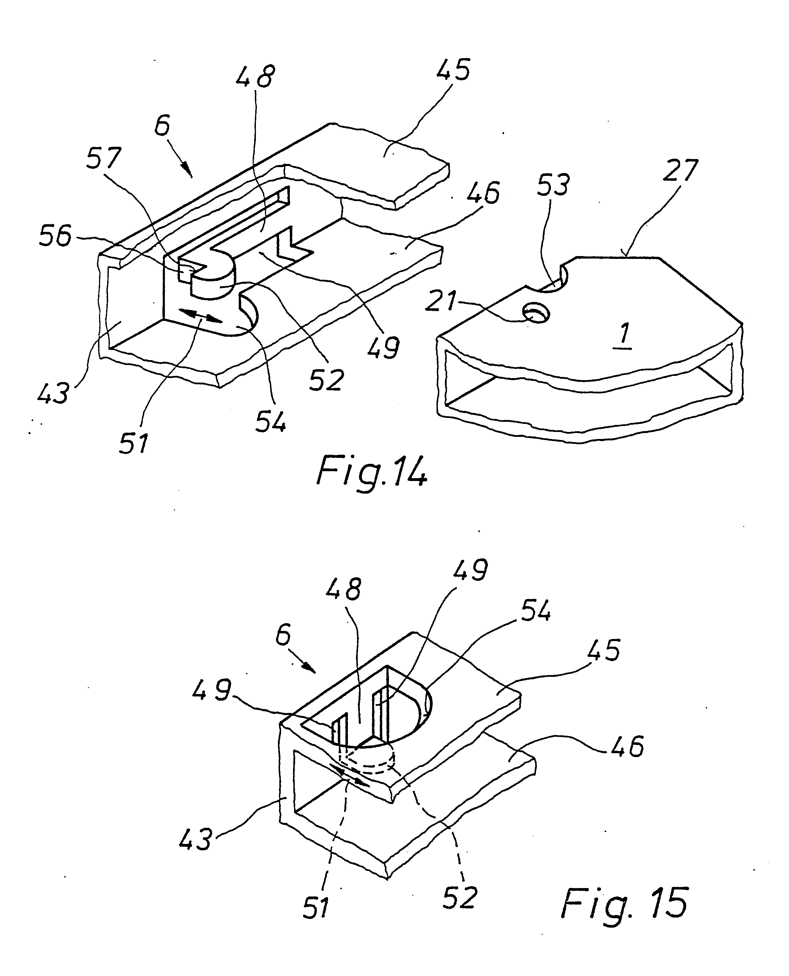

Zusätzlich zu dieser klemmenden Fixierung kann erfindungsgemäß vorgesehen sein, daß die Tragplatte 11 auf ihrer dem Andruckelement 13 zugekehrten Fläche 19 mindestens einen, vorzugsweise jedoch zwei rastend in auf einer Fläche der Diskette 1 ausgebildete Vertiefungen 21 (siehe Fig. 8 und 14) eingreifende Rastnocken 22 aufweist. Diese Rastnocken 22 weisen gemäß Fig. 5 auf ihrer der Öffnungsseite der Aufnahme 5 zugekehrten, d.h. dem Heftrand 3 abgekehrten Seite Schrägflächen 23 auf, die das Einführen der Rastnocken 22 in die Vertiefungen 21 der Diskette 1 erleichtern. Auch die den Schrägflächen 23 gegenüberliegenden Seiten 24 der Rastnocken 22 können - entgegen der dargestellten, zu der Tragplatte 11 senkrechten Ausbildung - leicht angeschrägt sein, um auch das Herausnehmen der Diskette 1 aus der Aufnahme 5 entgegen der Pfeilrichtung 17 zu erleichtern. Wesentlich ist, daß die Rastnocken 22 in einem von dem Steg 14 bzw. von der Anlagekante 14a beabstandeten Bereich der Tragplatte 11 angeordnet sind, da in diesem Bereich ein elastisches "Ausweichen" des Andruckelementes 13 in einer zu der Tragplatte 11 senkrechten Richtung möglich ist, so daß die Diskette 1 zunächst über die Rastnocken 22 geführt werden kann, bevor sie mit ihren Vertiefungen 21 in den Bereich der Rastnocken 22 gelangt und hierdurch von dem Andruckelement 13 auf die Tragplatte 11 gedrückt wird. Die Diskette 1 ist somit bei jeder beliebigen Lage der erfindungsgemäßen Vorrichtung gegen unbeabsichtigtes Herausrutschen aus der Aufnahme 5 dadurch gesichert, daß der zwischen ihren Vertiefungen 21 und den Rastnocken 22 vorhandene Formschluß durch die Federelastizität des Andruckelementes 13 aufrechterhalten wird.

In dem Ausführungsbeispiel nach Fig. 1 bis 7 werden somit die Halterungsmittel 6 einerseits von dem Andruckelement 13 in Verbindung mit der Tragplatte 11 und andererseits von den Rastnocken 22 gebildet.

Zur Herstellung der erfindungsgemäßen Vorrichtung weist die Tragplatte 11 eine Durchgangsöffnung 26 auf, die in ihrer Form etwa der Projektion des Andruckelementes 13 entspricht. Durch diese Öffnung 26 kann zum Formen des Andruckelementes 13 ein Formwerkzeug hindurchgeführt werden. Die Rastnocken 22 liegen hierdurch natürlich außerhalb des von dem zungenartigen Andruckelement 13 überdeckten Bereichs.

Der Heftrand 3 ist im dargestellten Beispiel etwa mittig an dem die Tragplatte 11 mit dem Andruckelement 13 verbindenden Steg 14 angebunden (siehe Fig. 4). Wie bereits erwähnt, liegt es jedoch im Rahmen der Erfindung, den Heftrand 3 mit der Tragplatte 11, alternativ hierzu aber auch mit dem Andruckelement 13 in einer Ebene liegend auszubilden.

Da 3-1·2 Zoll-Disketten an einer Ecke eine Abschrägung 27 aufweisen (siehe Fig. 14), ist auch in dem Eckbereich zwischen der Anlagekante 14a und der Seitenführung 16a eine der Abschrägung 27 der Diskette 1 entsprechende Schrägkante 28 ausgebildet (siehe insbesondere Fig. 2). Diese Schrägkante 28, sowie aber auch die Rastnocken 22, liegen dabei in dem Bereich zwischen den seitlichen Stegen 15 bzw. 16 und dem Andruckelement 13, so daß vorteilhafterweise eine Sichtkontrolle von außen dahingehend möglich ist, ob die Diskette 1 richtig eingeführt ist, was ebenfalls zu einer einfachen Handhabung beiträgt.

In Fig. 8 bis 11 ist eine zweite Ausführungsform der erfindungsgemäßen Vorrichtung dargestellt, die auch in diesem Fall aus dem Halterungsteil 2 und dem Heftrand 3 mit der Heftlochung 4 besteht. Das Halterungsteil 2 weist zumindest in seinen beiden an die Enden des Heftrandes 3 angrenzenden Bereichen jeweils eine Aufnahmetasche 32 zur Aufnahme einer Ecke der Diskette 1 auf. Jede Aufnahmetasche 32 weist einen Seitenanschlag 33, 33a auf, wobei der Seitenanschlag 33a an die Abschrägung 27 der Diskette 1 angepaßt ist. Weiterhin ist in jeder Aufnahmetasche 32 eine zu dem Heftrand 3 parallele und zu der Diskettenebene senkrechte Anlagefläche 34 ausgebildet, an die sich ein die Diskette 1 übergreifender Steg 35 anschließt. An dem Heftrand 3 ist in seinem mittigen Bereich eine Haltezunge 36 angebunden, die sich parallel zu der Diskettenebene in einem der Dicke der Diskette 1 entsprechenden Abstand von den Stegen 35 erstreckt. Somit wird bei diesem Ausführungsbeispiel die Aufnahme 5 von den Aufnahmetaschen 32, d.h. den Seitenanschlägen 33, 33a, der Anlagefläche 34 und den Stegen 35, sowie der Haltezunge 36 gebildet.

Der Heftrand 3, der im dargestellten Beispiel gemäß Fig. 9 in der etwa mittig zwischen der Haltezunge 36 und den Stegen 35 liegenden Ebene der Diskette 1 liegt, kann im Gegensatz hierzu auch in einer Ebene mit der Haltezunge 36 oder alternativ hierzu in einer Ebene mit den Stegen 35 liegen.

Die Haltezunge 36 überragt die in die Aufnahme 5 eingesetzte Diskette 1, d.h. deren freie Endkante 37, und weist auf ihrer der Diskette 1 zugekehrten Fläche im Bereich ihres freien Endes einen Halterungssteg 38 auf, der parallel zu der freien Endkante 37 der Diskette 1 verläuft und sich schräg in Richtung des Heftrandes 3 bzw. der Aufnahme 5 erstreckt. Der Halterungssteg 38 umgreift bzw. überrastet zur Fixierung der Diskette 1 in der Aufnahme 5 die freie Endkante 37 der Diskette 1, wie dies in Fig. 9 zu erkennen ist. Somit bilden in diesem Ausführungsbeispiel der Erfindung die Haltezunge 36 zusammen mit dem Halterungssteg 38 die Halterungsmittel 6 zum Fixieren der Diskette 1 in der Aufnahme 5. Zum Einbringen bzw. Entnehmen der Diskette 1 in bzw. aus der erfindungsgemäßen Vorrichtung ist die Haltezunge 36 elastisch verbiegbar, und zwar in einer zu der Diskettenebene etwa senkrechten Richtung, d.h. in Richtung des Doppelpfeils 39 in Fig. 9. Der lichte Abstand des Halterungssteges 38 von der Anlagefläche 34 ist dabei vorzugsweise geringfügig kleiner als die Länge der Diskette 1, so daß letztere klemmend fixiert wird. Der sich über den Halterungssteg 38 hinaus erstreckende Endbereich der Haltezunge 36 bildet eine Grifflasche 40, mit der die Haltezunge 36 gehandhabt werden kann. Entgegen der dargestellten Ausführungsform ist es für die Herstellung zweckmäßig, wenn der Halterungssteg 38 schmaler als die Haltezunge 36 ausgebildet ist und die Haltezunge 36 in in ihrem an den Halterungssteg 38 in Richtung des Heftrandes 3 angrenzenden Bereich eine Öffnung aufweist (nicht dargestellt), durch die ein Fomwerkzeug hindurchführbar ist.

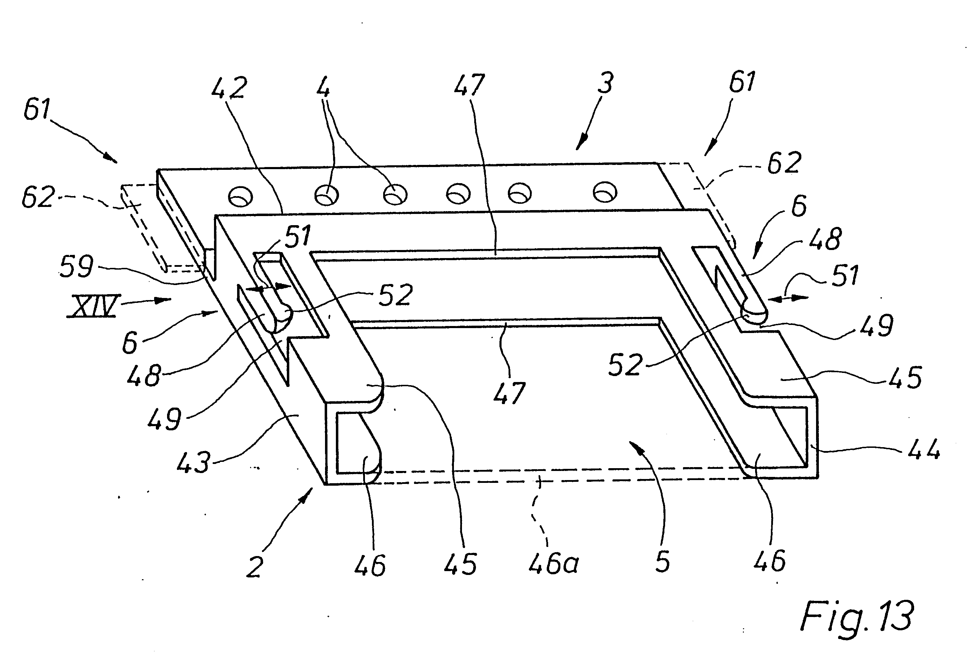

Auch in dem Ausführungsbeispiel nach Fig. 13 bis 15 besteht die erfindungsgemäße Vorrichtung aus dem Halterungsteil 2 und dem Heftrand 3 mit der Lochung 4. Das Halterungsteil 2 ist jedoch zur Bildung der Aufnahme 5 im wesentlichen kastenförmig ausgebildet und besteht aus einer parallel zu dem Heftrand 3 sowie senkrecht zu der Diskettenebene angeordneten Bodenwandung 42, zwei zu der Bodenwandung 42 sowie zu der Diskettenebene senkrecht angeordneten Seitenwandungen 43, 44 sowie zwei parallel zu der Diskettenebene verlaufenden Wandungen, und zwar einer oberen Wandung 45 und einer unteren Wandung 46. Auf seiner der Bodenwandung 42 gegenüberliegenden Seite ist das kastenförmige Halterungsteil 2 offen ausgebildet, so daß sich die Aufnahme 5 zum Einführen der Diskette 1 ergibt. Dabei entspricht der lichte Abstand zwischen den Seitenwandungen 43, 44 etwa der Breite und der lichte Abstand zwischen den Wandungen 45, 46 der Dicke der Diskette 1.

Die obere und untere Wandung 45, 46 können im wesentlichen rechteckig ausgebildet sein, jedoch ist es vorteilhaft, wenn zumindest eine der Wandungen 45, 46 eine in Richtung der Öffnungsseite der Aufnahme 5 randoffene Ausnehmung 47 aufweist. Hierdurch läßt sich in kostengünstiger Weise Material einsparen. In dem in Fig. 13 dargestellten Ausführungsbeispiel der Erfindung weist jede Wandung 45, 46 eine Ausnehmung 47 auf, jedoch ist gestrichelt eine durchgehende, rechteckige, untere Wandung 46a beispielhaft dargestellt.

Die Halterungsmittel 6 zum Fixieren der in die Aufnahme 5 eingeführten Diskette 1 sind bei diesem Ausführungsbeispiel als im Bereich zumindest von einer der Seitenwandungen 43, 44 angeordneter Rastfederarm 48 ausgebildet. Gemäß Fig. 13 sind im Bereich beider Seitenwandungen 43, 44 Rastfederarme 48 durch Freisparungen 49 derart gebildet, daß sie in einer zu den Seitenwandungen 43, 44 senkrechten Richtung, d.h. in Richtung des Doppelpfeils 51, federelastisch beweglich sind. An seinem freien Ende weist jeder Rastfederarm 48 einen Rastnocken 52 auf, der in eine seitlich an der Diskette 1 ausgebildete, randoffene Ausnehmung 53 (siehe Fig. 14) eingreift. Hierdurch erfolgt erfindungsgemäß beim Einschieben der Diskette 1 in die Aufnahme 5 des Halterungsteils 2 eine automatische, rastende Fixierung der Diskette 1.

Gemäß Fig. 13 erstrecken sich die schlitzförmigen Freisparungen 49 in zu der Einschubrichtung der Diskette 1 paralleler Richtung durch die obere Wandung 45 und gehen im Bereich des freien Endes des Rastfederarmes 48 in die Seitenwandungen 43, 44 über. Im Beispiel nach Fig. 14 sind die Freisparungen 49 im Eckbereich zwischen den Seitenwandungen 43 bzw. 44 und der unteren Wandung 46 angeordnet und erstrecken sich ebenfalls parallel zu der Einschubrichtung der Diskette 1. Gemäß Fig. 15 sind die Rastfederarme 48 durch schlitzförmige, sich von der unteren Wandung 46 senkrecht zur Diskettenebene nach oben in die Seitenwandung 43 bzw. 44 erstreckende Freisparungen 49 gebildet.

Zur Herstellung der erfindungsgemäßen Vorrichtung weisen die obere sowie die untere Wandung 45, 46 miteinander sowie mit dem Rastnocken 52 fluchtende Ausnehmungen 54 (siehe Fig. 14 und 15) auf, durch die ein Formwerkzeug zum Formen der Rastnocken 52 hindurchgeführt werden kann.

Bei einer in Fig. 14 dargestellten Weiterbildung der Erfindung ist der Rastfederarm 48 mit einem Überbiegeschutz ausgestattet, der durch eine am freien Ende des Rastfederarmes 48 derart ausgebildete Ausnehmung 56 gebildet ist, daß er eine mit der Innenfläche der Seitenwandung 43 bzw. 44 zusammenwirkende Anschlagfläche 57 aufweist.

Die Rastfederarme 48 können - wie dargestellt - auf beiden Seiten der Diskette 1 angeordnet sein, jedoch liegt es im Rahmen der Erfindung, lediglich auf einer Seite einen Rastfederarm 48 und auf der gegenüberliegenden Seite gegebenenfalls einen starren Nocken auszubilden.

In allen, in den Figuren 1 bis 15 dargestellten Ausführungsbeispielen, kann der Heftrand 3 erfindungsgemäß mit dem Halterungsteil 2 über ein Filmscharnier 59 verbunden sein, welches jedoch nur in Fig. 13 dargestellt ist. Dieses Filmscharnier 59 ermöglicht auch im in einen Ordner eingehefteten Zustand der erfindungsgemäßen Vorrichtung eine Beweglichkeit des Halterungsteils 2.

In einer Weiterbildung der Erfindung weist die Vorrichtung seitliche Verbindungsmittel 61 zum seitlichen Aneinanderreihen von mehreren erfindungsgemäßen Vorrichtungen auf, wobei dann die Heftränder 3 fluchtend angeordnet sind. Diese seitliche Aneinanderreihung ist vorteilhafterweise aufgrund der erfindungsgemäßen, an dem der Einschuböffnung der Aufnahme 5 gegenüberliegenden Seitenrand des Halterungsteils 2 quer zur Einschubrichtung der Diskette verlaufenden Anordnung des Heftrandes 3 möglich, wobei auch hier die oben bereits beschriebene, gute Zugriffmöglichkeit gegeben ist.

In Fig. 13 ist die einfachste Ausbildung derartiger Verbindungsmittel 61 dargestellt. In diesem Fall weist der Heftrand 3 Verlängerunger 62 auf (gestrichelt dargestellt), die Klebeflächen bilden. Die Verlängerungen 62 zweier seitlich aneinander angrenzender Vorrichtungen werden in überlappter Anordnung miteinander verklebt. Dabei ist darauf zu achten, daß zwischen den zwei Vorrichtungen ein seitlicher Abstand vorhanden ist, um die Bewegung der Rastarme 48 zu ermöglichen. Es liegt jedoch ebenfalls im Rahmen der Erfindung, die Bewegung durch Ausnehmungen der Rastarme 48 zu gewährleisten. Vorzugsweise weisen die Verlängerungen 62 nur die halbe Materialdicke des Heftrandes 3 auf, wobei eine der Verlängerungen 62 mit der Oberseite und die andere Verlängerung 62 mit der Unterseite des Heftrandes fluchtet. Die sich überlappenden und miteinander verbundenen Verlängerungen 62 weisen hierdurch insgesamt die Dicke des Heftrandes 3 auf, so daß sich ein stetiger Übergang zwischen zwei angrenzenden Hefträndern 3 ergibt. Ferner ist es vorteilhaft, wenn zumindest eine der Verlängerungen 62 eine selbstklebende Beschichtung aufweist.

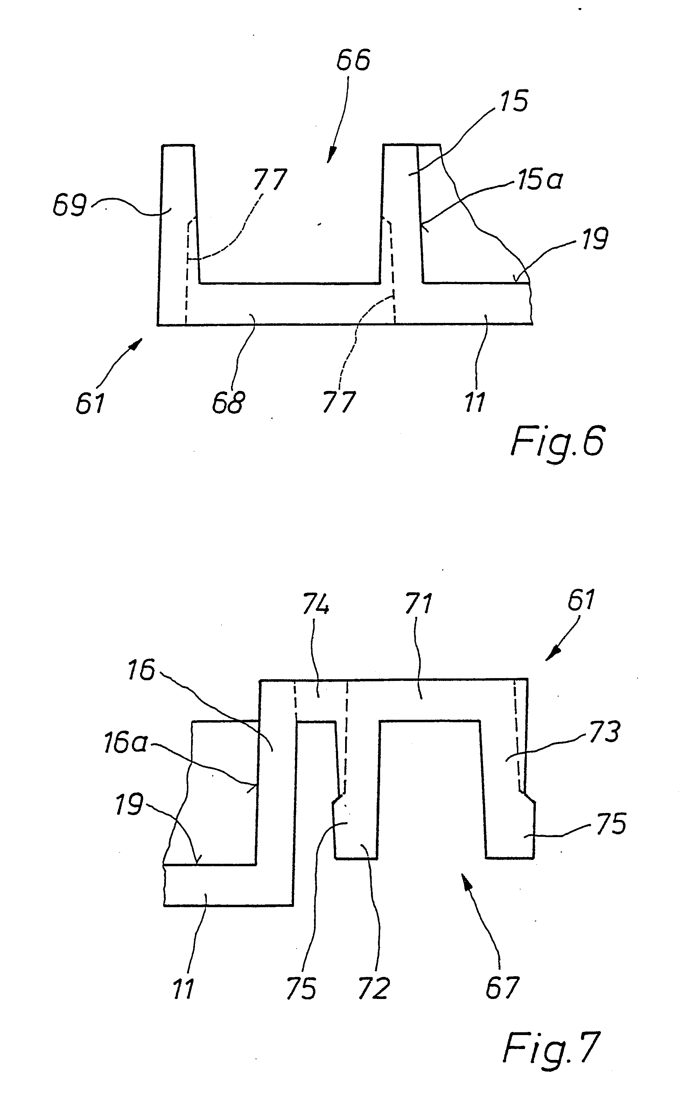

In dem Ausführungsbeispiel nach Fig. 1 bis 7 sind die seitlichen Verbindungsmittel 61 als Rastmittel zum lösbaren Verbinden mehrerer erfindungsgemäßer Vorrichtung ausgebildet. Wie sich insbesondere aus Fig. 3 in Verbindung mit Fig. 6 und 7 ergibt, ist an beiden Seiten der Tragplatte 11 jeweils eine U-Profilschiene 66, 67 ausgebildet. Die U-Profilschiene 66 besteht aus dem bereits beschriebenen, die Seitenführung 15a bildenden Steg 15, an dessen unterem, der Tragplatte 11 zugekehrten Ende sich ein mit der Tragplatte 11 fluchtender Bodensteg 68 anschließt, der in einen zu dem Steg 15 im wesentlichen parallelen Schenkel 69 übergeht (siehe Fig. 6). Die der Schiene 66 gegenüberliegende U-Profilschiene 67 besteht gemäß Fig. 7 aus einem Steg 71 und zwei Schenkeln 72, 73, wobei die Schiene 67 derart über einen im Eckbereich zwischen dem Steg 71 und dem Schenkel 72 angebundenen und mit dem Steg 71 fluchtenden Verbindungssteg 74 mit der freien Endkante des bereits beschriebenen, die Seitenführung 16a bildenden Steges 16 verbunden ist, daß die Schenkel 72, 73 sich im wesentlichen parallel zu dem Steg 16, d.h. senkrecht zu der Tragplatte 11, sowie in Richtung der Tragplatte 11 erstrecken. Die Schenkel 72, 73 weisen jeweils an zumindest einer Stelle ihrer Längserstreckung auf ihrer Außenfläche einen Rastnocken 75 auf. Wie aus Fig. 1 und 2 zu erkennen ist, sind im dargestellten Ausführungsbeispiel jeweils zwei Rastnocken 75 pro Schenkel 72, 73 vorgesehen. Die U-Profilschiene 66 weist gemäß Fig. 6 an mindestens einer Stelle ihrer Längserstreckung, im dargestellten Beispiel an zwei der Anordnung der Rastnocken 75 der Profilschiene 67 entsprechenden Stellen, im der Tragplatte 11 bzw. dem Bodensteg 68 zugekehrten Bereich der Innenflächen des Steges 15 und des Schenkels 69 Hinterschneidungen bzw. Aussparungen 77 (gestrichelt dargestellt) auf. Zur Herstellung dieser Aussparungen 77 weist der Bodensteg 68 jeweils einen Durchbruch 78 (Fig. 1 und 2) auf. Der Abstand der Schenkel 72, 73 der Profilschiene 67 und der Abstand des Schenkels 69 von dem Steg 15 der Profilschiene 66 sind derart aneinander angepaßt, daß die Schenkel 72, 73 der Profilschiene 67 einer ersten erfindungsgemäßen Vorrichtung in die Profilschiene 66, d.h. zwischen den Steg 15 und den Schenkel 69, einer zweiten erfindungsgemäßen Vorrichtung einführbar ist. Dabei greifen die Rastnocken 75 rastend in die Aussparungen 77 ein, wodurch die aneinander angrenzenden Vorrichtungen lösbar, rastend miteinander verbunden werden können. Ebenso wie bereits auch im Beispiel nach Fig. 13 bis 15 liegen dabei durch die vorteilhafte Ausbildung der Verbindungsmittel 61 die verbundenen Vorrichtungen, d.h. die Heftränder 3 und die Halterungsteile 2, jeweils in der gleichen Ebene, so daß sie gemeinsam in einem Ordner o.dgl. abgeheftet werden können. Die Heftlochung 4 ist dabei hinsichtlich der Lochabstände derart ausgebildet, daß diese gemeinsame Abheftung möglich ist. Bei Bedarf ist es jedoch vorteilhafterweise leicht möglich, zur Entnahme einer einzelnen Diskette 1 zusammen mit der diese halternden Vorrichtung die beiden Vorrichtungen wieder voneinander zu trennen.

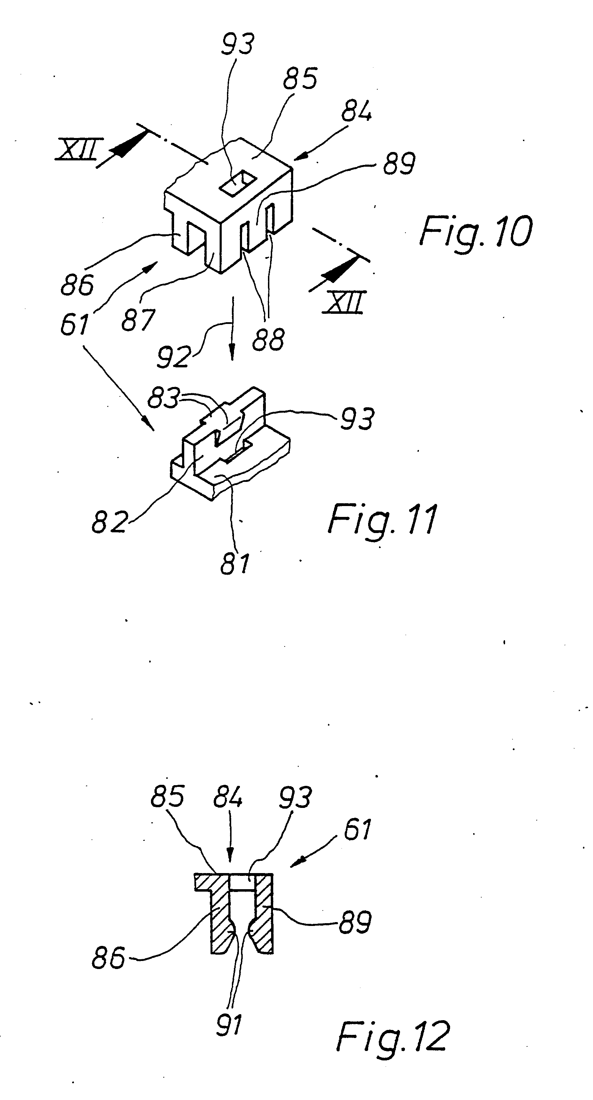

In dem Ausführungsbeispiel nach Fig. 8 bis 12 sind die seitlichen Verbindungsmittel 61 ebenfalls als lösbare Rastmittel ausgebildet. Wie insbesondere Fig. 8 und 11 zu entnehmen ist, ist einseitig an das Ende des Heftrandes 3 und an die Aufnahmetasche 32 angrenzend eine zu dem Heftrand 3 bzw. der Diskettenebene parallele Lasche 81 angeordnet, von deren Oberseite sich senkrecht ein zur Einschubrichtung der Diskette paralleler Steg 82 erstreckt. Mittig im oberen Endbereich des Steges 82 ist beidseitig je ein Rastansatz 83 ausgebildet. An das gegenüberliegende Ende des Heftrandes 3 und an die dort angeordnete Aufnahmetasche 32 angrenzend ist ein U-förmiges Halteteil 84 (Fig. 10) angeordnet, das aus einem zu der Diskettenebene parallelen Steg 85 und zwei zueinander sowie zu der Einschubrichtung der Diskette 1 parallelen Schenkeln 86, 87 besteht. Der Steg 82 der Lasche 81 und die Schenkel 86, 87 des Halteteils 84 weisen in entgegengesetzte Richtungen. Zumindest der äußere, dem Heftrand 3 abgekehrte Schenkel 87 des Halteteils 84 weist in seinem mittleren Bereich einen durch zwei Schlitze 88 gebildeten Rastfederarm 89 auf. Der Rastfederarm 89 sowie der andere Schenkel 86 weisen an ihren einander gegenüberliegenden, freien Enden Rastnocken 91 auf (siehe Fig. 12). Das Halteteil 84 einer ersten Vorrichtung ist nun in Pfeilrichtung 92 gemäß Fig. 10 auf den Steg 82 einer zweiten Vorrichtung aufsetzbar, wobei die Rastnocken 91 die Rastansätze 83 rastend hintergreifen.

Zur Herstellung der erfindungsgemäßen Vorrichtung weisen die Lasche 81 sowie der Steg 85 des Halteteils 84 Öffnungen 93 auf, durch die zum Formen der Rastansätze 83 bzw. der Rastnocken 91 Formwerkzeuge hindurchgeführt werden können.

In einer nicht dargestellten Weiterbildung der erfindungsgemäßen Vorrichtung kann der Heftrand 3 an seiner dem Halterungsteil 2 abgekehrten Längskante einen länglichen, wulstartigen Ansatz aufweisen, der auch ein Einstellen der Vorrichtung in z.B. eine Registraturkassette erlaubt. Dabei können in der Kassette Profilschienen ausgebildet bzw. angeordnet sein, in die der wulstartige Ansatz der erfindungsgemäßen Vorrichtung derart einrastet, daß eine Schwenkbewegung der Vorrichtung möglich ist. Aufgrund der oben beschriebenen, erfindungsgemäßen Anordnung des Heftrandes 3 ist dabei vorteilhafterweise ein Zugriff auf die Diskette von oben her möglich.

Die erfindungsgemäße seitliche Aneinanderreihung ermöglicht ein Einschieben und Entnehmen der Diskette vorteilhafterweise ohne Behinderungen durch die jeweils benachbarte Vorrichtung, wobei jede Diskette als solche, sowie aber auch zusammen mit der sie halternden, von den benachbarten Vorrichtungen lösbaren Vorrichtung entnommen werden kann.

Die vorliegende Erfindung ist nicht auf die dargestellten Ausführungsformen beschränkt, sondern umfaßt auch alle im Sinne der Erfindung gleichwirkenden Merkmale. So können z.B. die unterschiedlichen Ausbildungen des Halterungsteiles 2, der Aufnahme 5, der Halterungsmittel 6 und der seitlichen Verbindungsmittel 61 beliebig bzw. in jeder möglichen Weise miteinander kombiniert bzw. ausgetauscht werden.

**Ansprüche**

1. Vorrichtung zum Aufbewahren von Datendisketten, insbesondere von 3-1 2 Zoll-Disketten, in Registraturmitteln, insbesondere in Aktenordnern und dergleichen, bestehend aus einem flachen Halterungsteil für die Diskette und einem an einem Seitenrand des Halterungsteils angeordneten Heftrand mit einer Heftlochung, wobei das Halterungsteil eine die Diskette in Richtung von drei Seitenkanten sowie in zur Diskettenebene senkrechter Richtung fixierende Aufnahme sowie Halterungsmittel zum Fixieren der Diskette in der Aufnahme aufweist,
**dadurch gekennzeichnet,** daß die Halterungsmittel (6) derart ausgebildet sind, daß sie die Diskette in der Aufnahme (5) des Halterungsteiles (2) rastend und/oder klemmend fixieren.

2. Vorrichtung nach Anspruch 1,
**dadurch gekennzeichnet,** daß das Halterungsteil (2) mit dem insbesondere an dem einer Einschuböffnung für die Diskette gegenüberliegenden Seitenrand des Halterungsteils (2) quer, vorzugsweise senkrecht zur Disketten-Einschubrichtung (17) angeordneten Heftrand (3) als einstückiges Kunststoff-Spritz-oder Preßteil ausgebildet ist.

3. Vorrichtung nach Anspruch 1 oder 2,
**dadurch gekennzeichnet,** daß die Halterungsmittel (6) als Rastnocken (22, 52) ausgebildet sind, die rastend in an der Diskette (1) ausgebildete Vertiefungen (21) und/oder Ausnehmungen (54) eingreifen.

4. Vorrichtung nach Anspruch 1 oder 2,
**dadurch gekennzeichnet,** daß die Halterungsmittel (6) als die Diskette (1) an einer Kante (37) umgreifender Halter ausgebildet sind.

5. Vorrichtung nach einem oder mehreren der Ansprüche 1 bis 3,
**dadurch gekennzeichnet,** daß die Aufnahme (5) des Halterungsteils (2) von einer ebenen, im wesentlichen rechteckigen, einseitig mit dem Heftrand (3) verbundenen Tragplatte (11), mindestens einem zu der Tragplatte (11) etwa parallel angeordneten, nur auf der Seite des Heftrandes (3) mit der Tragplatte (11) verbundenen, zungenartigen Andruckelement (13), einer zu dem Heftrand (3) parallelen Anlagekante (14a) sowie zwei zu der Anlagekante (14a) senkrechten Seitenführungen (15a, 16a) gebildet ist, wobei jeweils zwischen den Seitenführungen (15a, 16a) und dem Andruckelement (13) über dessen gesamte Länge eine Freisparung gebildet ist.

6. Vorrichtung nach Anspruch 5,
**dadurch gekennzeichnet,** daß der lichte Abstand zwischen der Tragplatte (11) und dem Andruckelement (13) im Bereich des freien Endes des Andruckelementes (13) kleiner als die Dicke der Diskette (1) ist und in dem dem Heftrand (3) zugekehrten Bereich etwa der Dicke der Diskette entspricht.

7. Vorrichtung nach Anspruch 5 oder 6,
**dadurch gekennzeichnet,** daß die Tragplatte (11) auf ihrer dem Andruckelement (13) zugekehrten Fläche (19) und insbesondere in einem von dem Heftrand (3) beabstandeten Bereich der Fläche (19) mindestens einen, vorzugsweise zwei rastend in auf einer Fläche der Diskette (1) ausgebildete Vertiefungen (21) eingreifende Rastnocken (22) aufweist.

8. Vorrichtung nach Anspruch 4, **dadurch gekennzeichnet,** daß die Aufnahme (5) des Halterungsteiles (2) aus zwei seitlichen, jeweils aus einem Seitenanschlag (33, 33a), einer zu dem Heftrand (3) parallelen, zu der Ebene der Diskette (1) senkrechten Anlagefläche (34) und einem die Diskette (1) übergreifenden Steg (35) gebildeten Aufnahmetaschen (32) zur Aufnahme jeweils einer Ecke der Diskette (1) sowie einer im mittigen Bereich zwischen den Aufnahmetaschen (32) an dem Heftrand (3) angebundenen, sich in einem der Dicke der Diskette (1) entsprechenden Abstand von den Stegen (35) parallel zu der Diskettenebene erstreckenden, den die Diskette (1) umgreifenden Halter bildenden Haltezunge (36) gebildet ist.

9. Vorrichtung nach Anspruch 8, **dadurch gekennzeichnet,** daß die Haltezunge (36) die in die Aufnahme (5) eingesetzte Diskette (1) überragt und ihre freie Endkante (37) mit einem Halterungssteg (38) umgreift.

10. Vorrichtung nach einem oder mehreren der Ansprüche 1 bis 3, **dadurch gekennzeichnet,** daß das Halterungsteil (2) zur Bildung der Aufnahme (5) im wesentlichen kastenförmig aus einer parallel zu dem Heftrand (3) sowie senkrecht zu der Diskettenebene angeordneten Bodenwandung (42), zwei zu der Bodenwandung (42) sowie zu der Diskettenebene senkrecht angeordneten Seitenwandungen (43, 44) sowie zwei parallel zu der Diskettenebene verlaufenden Wandungen, und zwar einer oberen Wandung (45) und einer unteren Wandung (46), ausgebildet ist.

11. Vorrichtung nach Anspruch 10, **dadurch gekennzeichnet,** daß die obere Wandung (45) und oder die untere Wandung (46) eine vorzugsweise in Richtung der Öffnungsseite der Aufnahme (5) randoffene, etwa rechteckige Ausnehmung (47) aufweist.

12. Vorrichtung nach Anspruch 10 oder 11, **dadurch gekennzeichnet,** daß die Halterungsmittel (6) als seitliche, im Bereich zumindest einer der Seitenwandungen (43, 44) ausgebildete Rastfederarme (48) gebildet sind, die jeweils an ihrem freien Ende einen rastend in eine seitlich an der Diskette (1) ausgebildete, randoffene Ausnehmung (53) eingreifenden Rastnocken (52) aufweisen.

13. Vorrichtung nach Anspruch 12, **dadurch gekennzeichnet,** daß die Rastfederarme (48) durch schlitzförmige Freisparungen (49) derart gebildet sind, daß sie in einer zu den Seitenwandungen (43, 44) senkrechten Richtung federelastisch beweglich sind.

14. Vorrichtung nach Anspruch 13, **dadurch gekennzeichnet,** daß die Rastfederarme (48) sich in zu der Einschubrichtung der Diskette (1) paralleler oder zu der Diskettenebene senkrechter Richtung erstreckend im Eckbereich zwischen den Seitenwandungen (43, 44) und der oberen Wandung (45) oder der unteren Wandung (46) angeordnet sind.

15. Vorrichtung nach einem oder mehreren der Ansprüche 12 bis 14, **dadurch gekennzeichnet,** daß die Rastfederarme (48) mit einem Überbiegeschutz ausgestattet sind, der durch eine am freien Ende des Rastfederarmes (48) derart ausgebildete Ausnehmung (56) gebildet ist, daß der Rastfederarm (48) eine mit der Innenfläche der Seitenwandung (43 bzw. 44) zusammenwirkende Anschlagfläche (57) aufweist.

16. Vorrichtung nach einem oder mehreren der Ansprüche 12 bis 15, **dadurch gekennzeichnet,** daß nur im Bereich einer der Seitenwandungen (43 bzw. 44) ein Rastfederarm (48) und an der jeweils gegenüberliegenden Seitenwandung (44 bzw. 43) ein starrer Rastnocken angeordnet ist.

17. Vorrichtung nach einem oder mehreren der Ansprüche 1 bis 16, **dadurch gekennzeichnet,** daß der Heftrand (3) mit dem Halterungsteil (2) über ein Filmscharnier (59) verbunden ist.

18. Vorrichtung nach einem oder mehreren der Ansprüche 1 bis 17, **gekennzeichnet durch** seitliche, an die Enden des Heftrandes (3) angrenzende Verbindungsmittel (61) zum seitlichen Aneinanderreihen mehrerer Vorrichtungen.

19. Vorrichtung nach Anspruch 18, **dadurch gekennzeichnet**, daß die Verbindungsmittel (61) als beidendig des Heftrandes (3) angeordnete, laschenartige, Klebeflächen bildende Verlängerungen (62) ausgebildet sind.

20. Vorrichtung nach Anspruch 19, **dadurch gekennzeichnet**, daß zumindest eine der Verlängerungen (62) eine selbstklebende Beschichtung aufweist.

21. Vorrichtung nach Anspruch 18, **dadurch gekennzeichnet**, daß die Verbindungsmittel (61) als Rastmittel zum lösbaren Verbinden mehrerer Vorrichtungen ausgebildet sind.

22. Vorrichtung nach Anspruch 21, **dadurch gekennzeichnet**, daß die Rastmittel aus seitlichen, parallel zu der Einschubrichtung (17) der Diskette (1) angeordneten U-Profilschienen (66, 67) bestehen, deren Schenkel (15, 69; 62, 73) senkrecht zur Diskettenebene sowie in entgegengesetzte Richtungen weisend angeordnet sind, wobei der innere Abstand der Schenkel (15, 69) der ersten Profilschiene (66) etwa gleich dem äußeren Abstand der Schenkel (72, 73) der zweiten Profilschiene (67) ist und die Schenkel (72, 73) der zweiten Profilschiene (67) an zumindest einer Stelle ihrer Längserstreckung auf ihren Außenflächen Rastnocken (75) sowie die Schenkel (15, 69) der ersten Profilschiene (66) an den der Anordnung der Rastnocken (75) entsprechenden Stellen ihrer Längserstreckung auf ihren Innenflächen Ausnehmungen (77) zur rastenden Aufnahme der Rastnocken (75) aufweisen.

23. Vorrichtung nach Anspruch 21, **dadurch gekennzeichnet**, daß die Rastmittel aus einem an ein Ende des Heftrandes (3) angrenzenden, zu der Einschubrichtung der Diskette (1) parallel sowie senkrecht zur Diskettenebene angeordneten Steg (82) sowie einem am anderen Ende des Heftrandes (3) angeordneten, U-förmigen Halteteil (84) bestehen, wobei das Halteteil (84) zwei zueinander und zu der Einschubrichtung der Diskette (1) parallele Schenkel (86, 87) zur Aufnahme des Steges (82) aufweist und an dem Steg (82) und der Innenfläche zumindest eines der Schenkel (86, 87) Rastnocken (83, 91) ausgebildet sind.

24. Vorrichtung nach Anspruch 23, **dadurch gekennzeichnet**, daß die Rastnocken (91) der Schenkel (86, 87) des Halteteils (84) an durch Schlitze (88) gebildeten Rastfederarmen (89) ausgebildet sind.

25. Vorrichtung nach einem oder mehreren der Ansprüche 1 bis 24, **dadurch gekennzeichnet**, daß der Heftrand (3) an seiner dem Halterungsteil (2) abgekehrten Längskante zumindest einen länglichen, wulstartigen Ansatz aufweist.

Fig.1

Fig.2

Fig.3

Fig.4

Fig.5

66

69

77

15

15a

19

61

68

77

11

*Fig.6*

74

71

61

16

16a

19

73

75

11

75

72

67

*Fig.7*

Fig.8

Fig.9

Fig.10

Fig.11

Fig.12

Fig.13

0 286 987

Fig.14

Fig. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 177 435 (HUNKE & JOCHHEIM) * Seite 2, Zeile 28 - Seite 4, Zeile 14; Figuren * | 1,5,6 | G 11 B 33/04 B 42 F 15/00 |
| A | --- | 2,3,10 | |
| X,D | DE-A-3 512 823 (PFEIFFER) * Seiten 4,5; Figuren * | 1 | |
| A,D | --- | 3,4,7,8 ,10 | |
| X | EP-A-0 160 192 (EICHNER ORGANISATION) * Seiten 2,3; Figuren * | 1,3,5,6 | |
| A | --- | 7,8,10 | |
| A,D | EP-A-0 190 546 (E. STADELMANN GmbH) * Seite 5, Zeile 12 - Seite 6, Zeile 20; Figuren * | 1,2,5,6 ,10,11 | |
| A | US-A-4 518 275 (RAUCH III et al.) * Spalte 2, Zeile 58 - Spalte 3, Zeile 45; Figuren * --- | 1,5,8, 10 | RECHERCHIERTE SACHGEBIETE (Int. Cl.4) |
| A | US-A-4 119 200 (CASSIDY et al.) * Spalte 2 - Spalte 3, Zeile 47; Figuren * --- | 1-3,5-7 ,10,11 | G 11 B B 42 F |
| A | US-A-4 333 568 (WELDIN) * Spalte 2, Zeile 67 - Spalte 4, Zeile 6; Figuren * --- | 1,2,4,8 -10 | |
| A | US-A-4 375 850 (SMYTH et al.) * Spalte 2, Zeile 9 - Spalte 3, Zeile 31; Figuren * --- | 1-5 | |

-/-

Der vorliegende Recherchenbericht wurde für alle Patentansprüche erstellt

| Recherchenort | Abschlußdatum der Recherche | Prüfer |
|---|---|---|
| DEN HAAG | 29-06-1988 | SPIGARELLI A. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 027 379  (EICHNER ORGANISATION KG) <br> * Seiten 4,5; Figuren * <br> --- | 1-3,10 | |
| A | FR-A-1 207 387  (TUNBRIDGE) <br> * Seiten 1,2; Figuren * <br> ----- | 1,4 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 29-06-1988 | SPIGARELLI A. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument